# EUROPÄISCHE PATENTSCHRIFT

(11) **EP 2 742 547 B1**
(45) Veröffentlichungstag und Bekanntmachung des Hinweises auf die Patenterteilung: **12.08.2015**
(21) Anmeldenummer: 12732540.5
(22) Anmeldetag: 29.06.2012
(51) Int. Cl.: H01M 2/10, H01M 10/613, H01M 10/625, H01M 10/647, H01M 10/6554, H01M 10/6556, H01M 10/6567

(54) **BATTERIE FÜR EIN FAHRZEUG UND VERFAHREN ZUM FERTIGEN EINER SOLCHEN BATTERIE**
BATTERY FOR A VEHICLE AND METHOD FOR MANUFACTURING SUCH A BATTERY
ACCUMULATEUR POUR UN VÉHICULE ET PROCÉDÉ DE FABRICATION D'UN TEL ACCUMULATEUR

(30) Priorität: 10.08.2011 DE 102011109934
(43) Veröffentlichungstag der Anmeldung: 18.06.2014
(73) Patentinhaber: Audi AG, 85045 Ingolstadt (DE)
(72) Erfinder: FEES, Heiner, 74321 Bietigheim-Bissingen (DE); TRACK, Andreas, 74343 Sachsenheim (DE); MAISCH, Ralf, 74232 Abstatt (DE); KÄRCHER, Torsten, 74211 Leingarten (DE); EICHHORN, Alexander, 75031 Eppingen (DE)
(74) Vertreter: Herbst, Matthias Heinz
(86) Internationale Anmeldenummer: PCT/EP2012/002736
(87) Internationale Veröffentlichungsnummer: WO 2013/020618

(56) Entgegenhaltungen:
- WO-A1-2011/088997
- FR-A1- 2 782 399
- US-A1- 2009 087 727

## Beschreibung

Die Erfindung betrifft eine Batterie für ein Fahrzeug, wobei in einem Gehäuse der Batterie zumindest eine Batteriezelle und eine zum Abführen von Wärme von der zumindest einen Batteriezelle mit einem Kühlmedium beaufschlagbar ausgelegte Kühleinrichtung angeordnet sind. Des Weiteren betrifft die Erfindung ein Verfahren zum Fertigen einer solchen Batterie.

Die nach dem Anmeldetag der vorliegenden Anmeldung veröffentlichte DE 10 2010 021 922 A1 beschreibt eine Batterie mit einer Mehrzahl von so genannten Pouchzellen oder Coffeebag-Zellen, wobei zwischen zwei solchen Pouchzellen ein Kühlelement angeordnet ist. Das Kühlelement umfasst Wärmetauscherkanäle, welche in einem Rahmen des Kühlelements gehalten sind. Die Wärmetauscherkanäle ragen in einem drucklosen Zustand in Dickenrichtung nicht über den Rahmen hinaus. Aufgrund ihrer Elastizität ragen sie jedoch dann in Dickenrichtung über die Begrenzung des Rahmens hinaus, wenn sie unter einem Innendruck stehen, welcher vom Einleiten von Kühlmittel in die Wärmetauscherkanäle herrührt.

Die DE 10 2007 021 293 A1 beschreibt eine Batterie für ein Elektrofahrzeug, Brennstoffzellenfahrzeug oder Hybridfahrzeug. Einzelne Batteriezellen, welche zu einem Zellenpaket zusammengefasst sind, sind nach außen hin von einem gemeinsamen Gehäuse aus Kunststoff umgeben. Das Gehäuse umfasst einen einseitig offenen Behälter und einen den Behälter verschließenden Deckel, welche beide durch Spritzgießen gefertigt sind. Zum Kühlen der Batteriezellen sind in dem Gehäuse Rohre vorgesehen, welche mit einem Kühlfluid beaufschlagt werden. An den Rohren sind zahlreiche dünne Lamellen befestigt, welche dem Abführen von Wärme von den Batteriezellen dienen. Die Lamellen sind in ihrer Form an die jeweilige Batteriezelle angepasst, wobei eine jeweilige Batteriezelle in einem Aufnahmeraum aufgenommen ist, welcher durch eine oder mehrere Lamellen gebildet ist.

Die DE 10 2009 004 543 A1 beschreibt eine Fahrzeugbatterie mit Rundzellen, welche zwischen zwei Kühlerwänden angeordnet sind. In den Kühlerwänden sind Kühlkanäle für ein Kühlmittel vorgesehen. Zwischen den Batteriezellen sind Profilelemente aus einem wärmeleitenden Material vorgesehen, sodass über die Profilelemente ein Wärmeübergang zwischen den Rundzellen ermöglicht ist. Spanneinrichtungen spannen die beiden Kühlerwände zusammen, sodass diese mit vergleichsweise großer Kraft gegen die Profilteile und die Rundzellen gedrückt werden.

Bei diesen aus dem Stand der Technik bekannten Batterien ist es vergleichsweise aufwändig, die Kühleinrichtung in einen gut wärmeleitenden Kontakt mit den Batteriezellen zu bringen.

Aufgabe der vorliegenden Erfindung ist es daher, eine Batterie der eingangs genannten Gattung sowie ein Verfahren zum Fertigen einer solchen Batterie zu schaffen, bei welcher auf besonders einfache Art und Weise für eine homogene Wärmeabfuhr im Kühlbetrieb gesorgt ist.

Diese Aufgabe wird durch eine Batterie mit den Merkmalen des Patentanspruchs 1 und durch ein Verfahren mit den Merkmalen des Patentanspruchs 8 gelöst. Vorteilhafte Ausgestaltungen mit zweckmäßigen Weiterbildungen der Erfindung sind in den abhängigen Patentansprüchen angegeben.

Bei der erfindungsgemäßen Batterie für ein Fahrzeug umfasst die Kühleinrichtung wenigstens eine mit dem Kühlmedium versorgbare Kühlleitung. Die wenigstens eine Kühlleitung ist in einem durch das Gehäuse bereitgestellten Aufnahmeraum angeordnet und durch Einbringen eines Mediums in selbige aus einem Grundzustand in einen expandierten Zustand überführt, in welchem sie gegenüber dem Grundzustand ein vergrößertes Volumen einnimmt. Hierbei ist zumindest ein in dem Aufnahmeraum angeordneter Bereich der Kühleinrichtung bei Vorliegen des expandierten Zustands der wenigstens einen Kühlleitung gegen eine Hülle der zumindest einen Batteriezelle gepresst. Die wenigstens eine Kühlleitung ist also aus einem Werkstoff gebildet, welcher sich durch Einbringen des Mediums in die Kühlleitung plastisch verformen lässt. Durch dieses "Aufblasen" der Kühlleitungen wird eine besonders gute Anlage der Kühleinrichtung an der zumindest einen Batteriezelle erreicht. Die enge Anlage der Kühleinrichtung an der zumindest einen Batteriezelle führt im Betrieb der Kühleinrichtung zu einer besonders guten, gleichmäßigen Abfuhr der von der zumindest einen Batteriezelle freigesetzten Wärme.

Dadurch, dass die Kühlleitungen in ihrem Grundzustand ein geringeres Volumen einnehmen als im expandierten Zustand, ist es besonders einfach, diese wie gewünscht in dem Gehäuse in der Batterie zu platzieren. Anschließend erfolgt durch das Überführen der Kühlleitungen in den expandierten Zustand auf einfache Weise eine Fixierung der Kühlleitungen in dem Gehäuse der Batterie.

Zudem kann das Expandieren der wenigstens einen Kühlleitung besonders aufwandsarm im Rahmen einer ohnehin vorzusehenden Dichtigkeitsprüfung vorgenommen werden. Hierfür wird das Medium, beispielsweise ein Gas wie Helium, in die endseitig verschlossene Kühleinrichtung eingebracht und ein Druck aufgebaut, um die Dichtigkeit und Festigkeit der Kühleinrichtung zu prüfen.

In einer vorteilhaften Ausgestaltung der Erfindung ist die wenigstens eine Kühlleitung aus einem Kunststoff gebildet oder sie umfasst zumindest einen solchen. Ein dünnwandiges Kunststoffröhrchen ist nämlich besonders leicht durch Einbringen des Mediums plastisch verformbar und so in den expandierten Zustand überführbar. Zudem sind Leitungen aus Kunststoff, etwa aus Polyethylen oder Polypropylen, besonders einfach und kostengünstig für die Fertigung der Batterie verfügbar.

Wenn die Kühlleitungen aus einem zerstörungsfrei biegbaren Kunststoff gebildet sind, so ist die Gefahr einer Beschädigung der Kühlleitungen bei einer unfallbedingten Kraftbeaufschlagung der Batterie besonders gering. Es kann also bei einem Unfall zu einer Verschiebung der Batteriezellen relativ zu der Kühleinrichtung kommen, ohne dass die wenigstens eine Kühlleitung knickt oder bricht. Dadurch kann ein Austreten von Kühlmittel aus der Kühleinrichtung besonders weitgehend verhindert werden.

Zudem hat Kunststoff als Material für die Kühlleitungen im Vergleich zu Metall einen besonders niedrigen Wärmeübergangskoeffizienten, und damit ergibt sich eine besonders gleichmäßige Wärmeabfuhr über die gesamte Batterie, wenn die Kühleinrichtung von einem Kühlmedium durchströmt wird.

Als weiter vorteilhaft hat sich gezeigt, wenn die Kühleinrichtung eine Wärmeleitpaste umfasst, welche zwischen der wenigstens einen Kühlleitung und der Hülle der zumindest einen Batteriezelle angeordnet ist. Dadurch können nämlich Fertigungstoleranzen, was die Batteriezellen und/oder die Kühleinrichtung und/oder das Gehäuse betrifft, besonders gut ausgeglichen werden. Die Wärmeleitpaste sorgt zudem für eine flächige Anlage der Kühleinrichtung an den Batteriezellen und verhindert besonders sicher das Auftreten von thermisch isolierender Luft zwischen der Hülle der Batteriezellen und der Kühleinrichtung.

Zusätzlich oder alternativ kann ein wärmeleitender Klebstoff zwischen den Kühlleitungen und der Hülle der zumindest einen Batteriezelle angeordnet sein. Dann ist im Kühlbetrieb nicht nur eine besonders gute Wärmeübertragung von der zumindest einen Batteriezelle auf das Kühlmedium sichergestellt, sondern zudem ist ein besonders sicherer Halt der Kühlleitungen an den Hüllen der Batteriezellen gewährleistet.

Bei einer weiteren vorteilhaften Ausgestaltung der Erfindung umfasst die Kühleinrichtung zumindest einen Kühlmittelanschluss, über welchen wenigstens zwei Kühlleitungen mit dem Kühlmedium beaufschlagbar sind. Durch das Vorsehen mehr als einer Kühlleitung, welche über einen gemeinsamen Kühlmittelanschluss versorgt werden, lässt sich das Kühlmedium besonders gut so in der Batterie verteilen, dass beim Betrieb der Kühleinrichtung eine sehr gleichmäßige Wärmeabfuhr erfolgt.

Bevorzugt ist es hierbei, wenn der zumindest eine Kühlmittelanschluss in einem Bereich des Gehäuses angeordnet ist, in welchem durch das Gehäuse eine jeweilige Aufnahme für Endbereiche der wenigstens zwei Kühlleitungen bereitgestellt ist. Die Aufnahme kann insbesondere mit einem Klebstoff und/oder einem Dichtmaterial versehen sein, um eine dichtsitzende Anbindung der Kühlleitungen an den die Aufnahme bereitstellenden Bereich des Gehäuses sicherzustellen.

Als weiter vorteilhaft hat es sich gezeigt, wenn zumindest eine Wand des Gehäuses der Batterie durch Separatoren gebildet ist, welche zwei Batteriezellen elektrisch voneinander isolieren. Wenn derartige, ohnehin zur Potenzialtrennung vorgesehene Separatoren zugleich das Gehäuse der Batterie bilden, lässt sich die Batterie besonders einfach fertigen. Die beispielsweise aus einem Kunststoff gebildeten Separatoren können hier insbesondere derart miteinander verbunden sein, dass die zumindest eine Wand des Gehäuses gegenüber Wasser und/oder Feuchtigkeit, insbesondere Luftfeuchtigkeit, hermetisch dicht ist. Dies kann beispielsweise durch Vorsehen einer Dichtung zwischen zwei miteinander gekoppelten Separatoren sichergestellt werden.

Schließlich hat es sich als vorteilhaft gezeigt, wenn durch die zumindest eine Wand der wenigstens eine Aufnahmeraum für die zumindest eine Kühlleitung gebildet ist. Dann brauchen bei der Fertigung der Batterie die Kühlleitungen lediglich in die Aufnahmeräume eingebracht zu werden, welche durch die miteinander gekoppelten Separatoren gebildet sind. Anschließend sorgt dann das Einbringen des Mediums in die in den Aufnahmeräumen angeordneten Kühlleitungen für ein Vergrößern des Volumens der Kühlleitungen und somit für einen entsprechend großen Anpressdruck, mit welchem die Kühleinrichtung zumindest bereichsweise gegen die zumindest eine Batteriezelle gedrückt wird.

Bei dem erfindungsgemäßen Verfahren zum Fertigen einer Batterie für ein Fahrzeug werden zumindest eine Batteriezelle und eine zum Abführen von Wärme von der zumindest einen Batteriezelle mit einem Kühlmedium beaufschlagbar ausgelegte Kühleinrichtung in einem Gehäuse der Batterie angeordnet. Wenigstens eine mit dem Kühlmedium versorgbare Kühlleitung wird in einem durch das Gehäuse bereitgestellten Aufnahmeraum angeordnet. In die wenigstens eine Kühlleitung wird dann ein Medium eingebracht. Dies führt dazu, dass die wenigstens eine Kühlleitung in einen expandierten Zustand überführt wird, in welchem sie plastisch verformt ist und gegenüber einem Grundzustand ein vergrößertes Volumen einnimmt. Dadurch wird zumindest ein in dem Aufnahmeraum angeordneter Bereich der Kühleinrichtung gegen eine Hülle der zumindest einen Batteriezelle gepresst. Die Volumenvergrößerung der Kühlleitung sorgt hierbei für den Anpressdruck, mit welchem zumindest der Bereich der Kühleinrichtung gegen die zumindest eine Batteriezelle gepresst wird. Durch den hohen Anpressdruck und die damit einhergehend gute Anlage der Kühleinrichtung an der zumindest einen Batteriezelle erfolgt im Kühlbetrieb die Wärmeabfuhr besonders effizient.

Die für die erfindungsgemäße Batterie beschriebenen Vorteile und bevorzugten Ausführungsformen gelten auch für das erfindungsgemäße Verfahren zum Fertigen einer Batterie.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine perspektivische Ansicht einer Batterie zum Speichern und Freigeben von Antriebsenergie für ein Fahrzeug;
- Fig. 2: eine Schnittansicht durch die Batterie gemäß Fig. 1;
- Fig. 3: in einer vergrößerten Detailansicht einen Teilbereich der Schnittansicht gemäß Fig. 2; und
- Fig. 4: ausschnittsweise die Batterie gemäß Fig. 1 in einer weiteren Schnittansicht.

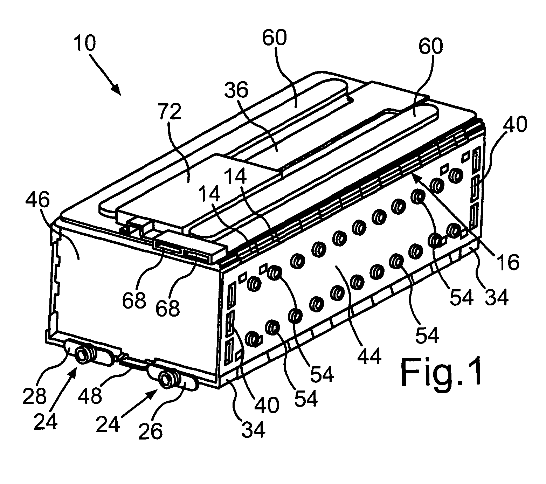

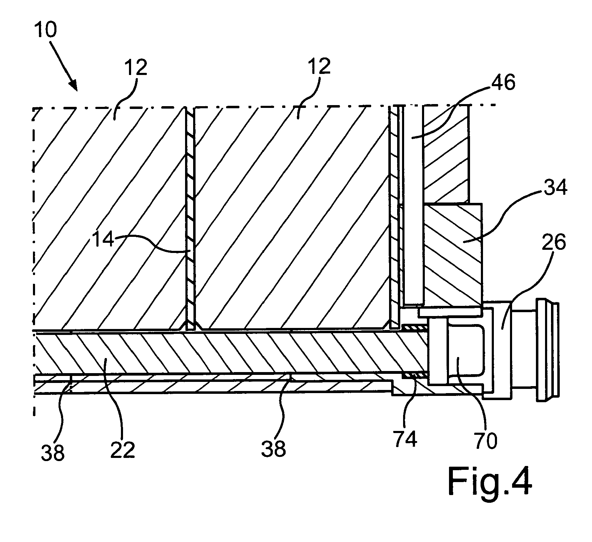

Eine in Fig. 1 gezeigte Batterie 10 für ein Fahrzeug ist im Beispiel als Lithium-lonen-Batterie ausgebildet. Die Batterie 10 umfasst eine Mehrzahl von Batteriezellen 12, welche durch aus einem Kunststoff gebildete Separatoren 14, welche auch als Spacer bezeichnet werden, voneinander elektrisch isoliert sind (vgl. Fig. 4). Die vorliegend prismatischen Batteriezellen 12 bilden einen Stapel.

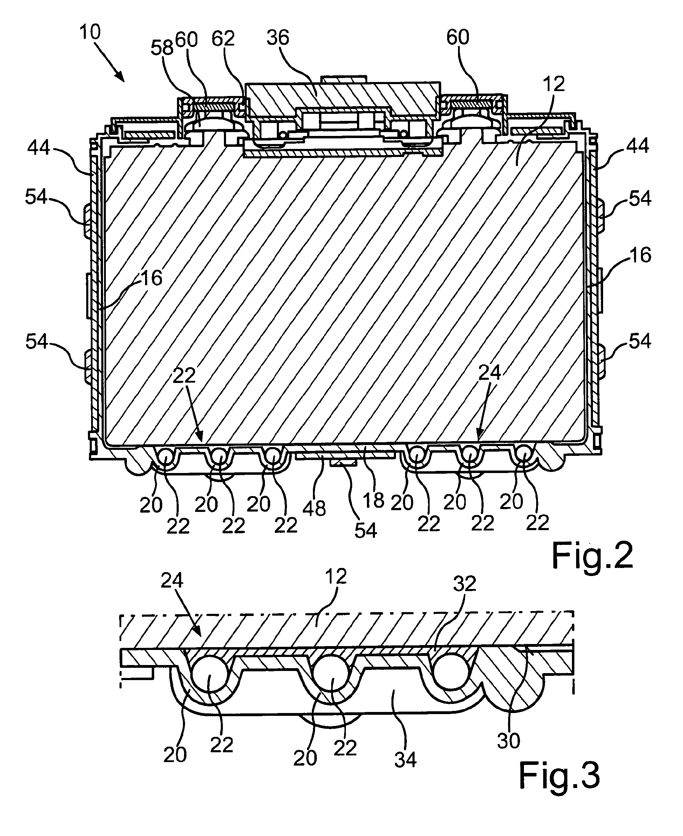

An einander zugewandten Stirnseiten der Separatoren 14 sorgt Dichtmaterial 38 (vgl. Fig. 4) dafür, dass durch die Separatoren 14 gebildete Wände eines Gehäuses der Batterie 10 gegenüber Wasser und Feuchtigkeit dicht sind. Die Separatoren 14 bilden vorliegend Seitenwände 16 und eine Bodenplatte 18 (vgl. Fig. 2) des Gehäuses der Batterie 10, in welchem der Stapel der Batteriezellen 12 aufgenommen ist.

Im Bereich der durch die Separatoren 14 gebildeten Bodenplatte 18 des Gehäuses sind durch die Separatoren 14 (vorliegend sechs) Rillen 20 gebildet, in welchen jeweilige Kühlleitungen 22 einer Kühleinrichtung 24 aufgenommen sind (vgl. Fig. 2). Die Kühleinrichtung 24 umfasst einen ersten Kühlmittelanschluss 26, über welchen ein Kühlmittel in die Kühleinrichtung 24 eingebracht wird und einen zweiten Kühlmittelanschluss 28, über welchen das Kühlmittel die Kühleinrichtung 24 wieder verlässt (vgl. Fig. 1).

Die Kühlmittelleitungen 22 der Kühleinrichtung 24 sind aus einem dünnwandigen und daher plastisch verformbaren Kunststoff gebildet. Diese Kunststoffröhrchen werden in einem Grundzustand in die Rillen 20 eingelegt oder eingeschoben. Anschließend werden die Kühlleitungen 22 zur Dichtigkeitsprüfung mit einem warmen, also beispielsweise Zimmertemperatur aufweisenden Gas befüllt und über das Gas mit Druck beaufschlagt. Dieses Aufblasen der Kühlleitungen 22 bewirkt wegen deren plastischer Verformbarkeit eine dauerhafte Volumenvergrößerung derselben. Es wird hierbei die ohnehin vorgesehene Dichtigkeitsprüfung, bei welcher das Gas zum Einsatz kommt, dazu genutzt, die Kühlleitungen 22 in einen expandierten Zustand zu überführen, in welchem sie gegenüber dem Grundzustand ein vergrößertes Volumen einnehmen.

Zum Aufweiten der Kühlleitungen 22 kann das Gas mit einem Druck von beispielsweise 4 - 5 bar in die Kühlleitungen 22 hineingepresst werden. Als Gas kann insbesondere Helium zum Einsatz kommen, welches aufgrund seiner hohen Flüchtigkeit besonders gut zum Detektieren von einer etwaigen Leckage in der Kühleinrichtung 24 geeignet ist.

Insbesondere aus Fig. 3 geht hervor, dass zwischen den Kühlleitungen 22 und einer Unterseite 30 einer jeweiligen Hülle der Batteriezellen 12 eine wärmeleitende Vergussmasse 32 eingebracht ist. Eine solche Vergussmasse 32 kann in Form einer Wärmeleitpaste oder eines wärmeleitenden Klebstoff vorgesehen sein. Infolge der durch das Einbringen des Gases in die Kühlleitungen 22 bewirkten Volumenvergrößerung derselben stützen sich die Kühlleitungen 22 mit ihrer Unterseite an den Rillen 20 ab, und sie drücken entsprechend die Vergussmasse 32 gegen die Unterseite 30 der Batteriezellen 12. So wird ein besonders inniger und flächiger Kontakt der die Vergussmasse 32 umfassenden Kühleinrichtung 24 zu den Batteriezellen 12 hergestellt.

Wände des Gehäuses für den Stapel der Batteriezellen 12 sind durch die zwischen jeweils zwei Batteriezellen 12 angeordneten Separatoren 14 und durch zwei den Stapel der Batteriezellen 12 endseitig abschließende Separatoren 34 gebildet (vgl. Fig. 1). Die miteinander gekoppelten Separatoren 14, 34 bilden hierbei ein den Stapel der Batteriezellen 12 zu fünf Seiten hin hermetisch abschließendes Gehäuse, und ein Deckel 36 schließt das Gehäuse nach oben hin gegen Wasser und Feuchtigkeit dicht ab (vgl. Fig. 2).

Der Zusammenhalt des Gehäuses ist durch Seitenplatten 44 und Endplatten 46 gewährleistet (vgl. Fig. 1), welche das Gehäuse außenumfangsseitig umgeben. Hierbei sind an den, insbesondere aus einem Federstahl gebildeten, Endplatten 46 ausgebildete Zungen 40 in entsprechende, in den Seitenplatten 44 vorgesehene, Laschen eingeführt. Eine weitere Fixierplatte 48 verläuft bodenseitig - und zwar zwischen einem Vorlaufstrang und einem Rücklaufstrang der Kühleinrichtung 24 - von der in Fig. 1 vorderen Endplatte 46 bis zur hinteren Endplatte. Diese Fixierplatte 48 ist an den beiden Endplatten 46 ebenfalls über in Laschen eingreifende Zungen fixiert.

Mit den Separatoren 14 sind einstückig Dome 54 oder Buchsen ausgebildet, welche durch entsprechende Durchtrittsöffnungen in den Seitenplatten 44 bzw. in der Fixierplatte 48 hindurchtreten (vgl. Fig. 2). So sorgen die Seitenplatten 44 und die Fixierplatte 48 für das Einhalten vorbestimmter Abstände zwischen den Separatoren 14 (vgl. Fig. 1). Die Dome 54 werden nach dem Einbringen derselben in die Durchtrittsöffnungen heißverstemmt, um eine sichere Halterung der Seitenplatten 44 und der Fixierplatte 48 zu erreichen.

In den Deckel 36 sind Sammelschienen integriert, über welche Pole der Batteriezellen 12 elektrisch kontaktiert werden. Hierfür können die Sammelschienen durch Schrauben 58 (vgl. Fig. 2) mit den Polen der Batteriezellen 12 verbunden werden. Alternativ ist es möglich, die Sammelschienen mit den Polen der Batteriezellen 12 zu verschweißen. Eine Abdeckung 60, welche über eine Dichtung 62 gegenüber einem Grundkörper des Deckels 36 abgedichtet ist, sorgt dafür, dass die Schrauben 58 und die Sammelschienen nach oben gegen ein Eindringen von Feuchtigkeit oder Wasser geschützt sind.

Über zwei in den Deckel 36 integrierte Hochvoltanschlüsse 68 kann aus der Batterie 10 elektrische Energie für einen Antriebsmotor des Fahrzeugs entnommen bzw. in die Batterie 10 eingebracht werden. Eine in dem Deckel 36 angeordnete Steuerungsplatine ist in der Batterie 10 nach oben hin ebenfalls durch eine Abdeckung 72 abgedeckt (vgl. Fig. 1).

Wie aus Fig. 4 ersichtlich, umfasst der Kühlmittelanschluss 26 des Vorlaufstrangs der Kühleinrichtung 24 eine Verteilerkammer 70, über welche im Kühlbetrieb (vorliegend drei) nebeneinander angeordnete Kühlleitungen 22 mit dem Kühlmittel versorgt werden. Entsprechend weist der zweite Kühlmittelanschluss 28 des Rücklaufstrangs eine Sammelkammer auf, in welche das aus den (ebenfalls drei) weiteren Kühlleitungen 22 stammende, erwärmte Kühlmittel eintritt, bevor es die Batterie 10 verlässt.

Durch die endseitigen Separatoren 34 sind zudem Aufnahmen für die Kühlleitungen 22 gebildet, welche insbesondere mit einem Klebstoff 74 oder mit einer Dichtmasse versehen sein können, um eine dichtsitzende Anbindung der Kühlleitungen 22 an den Separator 34 zu erreichen.

## Patentansprüche

1. Batterie für ein Fahrzeug, wobei in einem Gehäuse (16, 18, 36) der Batterie (10) zumindest eine Batteriezelle (12) und eine zum Abführen von Wärme von der zumindest einen Batteriezelle (12) mit einem Kühlmedium beaufschlagbar ausgebildete Kühleinrichtung (24) angeordnet sind,
**dadurch gekennzeichnet, dass**
die Kühleinrichtung (24) wenigstens eine mit dem Kühlmedium versorgbare Kühlleitung (22) umfasst, welche in einem durch das Gehäuse (18) bereitgestellten Aufnahmeraum (20) angeordnet ist und welche durch Einbringen eines Mediums in die wenigstens eine Kühlleitung (22) aus einem Grundzustand in einen expandierten Zustand überführt ist, in welchem sie plastisch verformt ist und gegenüber dem Grundzustand ein vergrößertes Volumen einnimmt, wobei zumindest ein in dem Aufnahmeraum (20) angeordneter Bereich (32) der Kühleinrichtung (24) bei Vorliegen des expandierten Zustands der wenigstens einen Kühlleitung (22) gegen eine Hülle der zumindest einen Batteriezelle (12) gepresst ist.

2. Batterie nach Anspruch 1,
**dadurch gekennzeichnet, dass**
die wenigstens eine Kühlleitung (22) aus einem Kunststoff gebildet ist.

3. Batterie nach Anspruch 1 oder 2,
**dadurch gekennzeichnet, dass**
die Kühleinrichtung (24) eine Wärmeleitpaste (32) und/oder einen wärmeleitenden Klebstoff umfasst, welche bzw. welcher zwischen der wenigstens einen Kühlleitung (22) und der Hülle der zumindest einen Batteriezelle (12) angeordnet ist.

4. Batterie nach einem der Ansprüche 1 bis 3,
**dadurch gekennzeichnet, dass**
die Kühleinrichtung (24) zumindest einen Kühlmittelanschluss (26) umfasst, über welchen wenigstens zwei Kühlleitungen (22) mit dem Kühlmedium beaufschlagbar sind.

5. Batterie nach Anspruch 4,
**dadurch gekennzeichnet, dass**
der zumindest eine Kühlmittelanschluss (26) in einem Bereich des Gehäuses (34) angeordnet ist, in welchem eine jeweilige Aufnahme für Endbereiche der wenigstens zwei Kühlleitungen (22) bereitgestellt ist.

6. Batterie nach einem der Ansprüche 1 bis 5,
**dadurch gekennzeichnet, dass**
zumindest eine Wand (18) des Gehäuses der Batterie (10) durch Separatoren (14, 34) gebildet ist, welche zwei Batteriezellen (12) elektrisch voneinander isolieren.

7. Batterie nach Anspruch 6,
**dadurch gekennzeichnet, dass**
durch die zumindest eine Wand (18) der wenigstens eine Aufnahmeraum (20) für die wenigstens eine Kühlleitung (22) gebildet ist.

8. Verfahren zum Fertigen einer Batterie (10) für ein Fahrzeug, bei welchem zumindest eine Batteriezelle (12) und eine zum Abführen von Wärme von der zumindest einen Batteriezelle (12) mit einem Kühlmedium beaufschlagbar ausgelegte Kühleinrichtung (24) in einem Gehäuse (16, 18, 36) der Batterie (10) angeordnet werden,
**dadurch gekennzeichnet, dass**
wenigstens eine mit dem Kühlmedium versorgbare Kühlleitung (22) in einem durch das Gehäuse (18) bereitgestellten Aufnahmeraum (20) angeordnet und in die wenigstens eine Kühlleitung (22) ein Medium eingebracht wird, wobei die wenigstens eine Kühlleitung (22) in einen expandierten Zustand überführt wird, in welchem sie plastisch verformt ist und gegenüber einem Grundzustand ein vergrößertes Volumen einnimmt, wodurch zumindest ein in dem Aufnahmeraum (20) angeordneter Bereich (32) der Kühleinrichtung (24) gegen eine Hülle der zumindest einen Batteriezelle (12) gepresst wird.

## Claims

1. Battery for a vehicle, at least one battery cell (12) and one cooling device (24), to which a cooling medium can be supplied in order to dissipate heat from the at least one battery cell (12), being arranged in a housing (16, 18, 36) of the battery (10), **characterised in that**
the cooling device (24) comprises at least one cooling line (22) which can be supplied with the cooling medium, is arranged in a receiving space (20) formed by the housing (18) and is changed from a basic state into an expanded state, in which it is plastically deformed and has a larger volume than in the basic state, by introducing a medium into the at least one cooling line (22), at least one region (32), arranged in the receiving space (20), of the cooling device (24) being pressed against a casing of the at least one battery cell (12) when the at least one cooling line (22) is in the expanded state.

2. Battery according to claim 1, **characterised in that** the at least one cooling line (22) is formed from a plastics material.

3. Battery according to either claim 1 or claim 2, **characterised in that** the cooling device (24) comprises a heat paste (32) and/or a thermoconductive adhesive arranged between the at least one cooling line (22) and the casing of the at least one battery cell (12).

4. Battery according to any of claims 1 to 3, **characterised in that** the cooling device (24) comprises at least one coolant connection (26), by means of which the cooling medium can be supplied to at least two cooling lines (22).

5. Battery according to claim 4, **characterised in that** the at least one coolant connection (26) is arranged in a region of the housing (34) in which a respective receptacle is provided for end regions of the at least two cooling lines (22).

6. Battery according to any of claims 1 to 5, **characterised in that** at least one wall (18) of the housing of the battery (10) is formed by separators (14, 34) which electrically insulate two battery cells (12) from each other.

7. Battery according to claim 6, **characterised in that** the at least one receiving space (20) for the at least one cooling line (22) is formed by the at least one wall (18).

8. Method for producing a battery (10) for a vehicle, in which at least one battery cell (12) and one cooling device (24), to which a cooling medium can be supplied in order to dissipate heat from the at least one battery cell (12), are arranged in a housing (16, 18, 36) of the battery (10), **characterised in that** at least one cooling line (22) which can be supplied with the cooling medium is arranged in a receiving space (20) formed by the housing (18) and a medium is introduced into the at least one cooling line (22), the at least one cooling line (22) being changed into an expanded state in which it is plastically deformed and has a larger volume than in a basic state, as a result of which at least one region (32), arranged in the receiving space (20), of the cooling device (24) is pressed against a casing of the at least one battery cell (12).

## Revendications

1. Accumulateur pour un véhicule, dans lequel on aménage dans un boîtier (16, 18, 36) de l'accumulateur (10) au moins un élément d'accumulateur (12) et un dispositif de refroidissement (24) conçu pour évacuer la chaleur du au moins un élément d'accumulateur (12) et qui peut être alimenté par un agent réfrigérant,
**caractérisé en ce que** :
le dispositif de refroidissement (24) comprend au moins un conduit de refroidissement (22) qui peut être alimenté par l'agent réfrigérant et qui est aménagé dans un espace récepteur (20) ménagé par le boîtier (18) et qui est converti, par l'acheminement d'un agent dans le au moins un conduit de refroidissement (22), d'un état de base à un état dilaté, dans lequel il subit une déformation plastique et adopte par rapport à l'état de base un plus grand volume, dans lequel au moins une zone (32) du dispositif de refroidissement (24) aménagée dans l'espace récepteur (20) est pressée contre une coque du au moins un accumulateur (12) lors de l'instauration de l'état dilaté du au moins un conduit de refroidissement (22).

2. Accumulateur selon la revendication 1,
**caractérisé en ce que**
le au moins un conduit d'alimentation (22) est formé d'une matière plastique.

3. Accumulateur selon la revendication 1 ou la revendication 2,
**caractérisé en ce que**
le dispositif de refroidissement (24) comprend une pâte thermoconductrice (32) et/ou un adhésif thermoconducteur, qui est aménagé(e) entre le au moins un conduit de refroidissement (22) et la coque du au moins un élément d'accumulateur (12).

4. Accumulateur selon l'une quelconque des revendications 1 à 3,
**caractérisé en ce que**,
le dispositif de refroidissement (24) comprend au moins un raccordement d'agent réfrigérant (26) via lequel au moins deux conduits de refroidissement (22) peuvent être alimentés par l'agent réfrigérant.

5. Accumulateur selon la revendication 4,
**caractérisé en ce que**,
le au moins un raccordement d'agent réfrigérant (26) est aménagé dans une zone du boîtier (34), dans laquelle un logement respectif est aménagé pour les zones d'extrémité des au moins deux conduits de refroidissement (22).

6. Accumulateur selon l'une quelconque des revendications 1 à 5,
**caractérisé en ce que**,
au moins une paroi (18) du boîtier de l'accumulateur (10) est formée par des séparateurs (14, 34) qui isolent électriquement l'un de l'autre deux éléments d'accumulateur (12).

7. Accumulateur selon la revendication 6,
**caractérisé en ce que**,
un espace récepteur (20) pour le au moins un conduit de refroidissement (22) est formé par la au moins une paroi (18).

8. Procédé de fabrication d'un accumulateur (10) pour un véhicule, dans lequel au moins un élément d'accumulateur (12) et un dispositif d'alimentation (24) conçu pour évacuer la chaleur du au moins un élément d'accumulateur (12) et qui peut être alimenté en agent réfrigérant dans un boîtier (16, 18, 36) de l'accumulateur (10),
**caractérisé en ce que**
au moins un conduit d'alimentation (22) qui peut être alimenté par l'agent réfrigérant est aménagé dans un espace récepteur (20) situé dans le boîtier (18) et un agent est acheminé dans le au moins un conduit de refroidissement (22), dans lequel le au moins un conduit d'alimentation (22) est converti à un état dilaté, dans lequel il subit une déformation plastique et adopte par rapport à un état de base un plus grand volume par lequel au moins une zone (32) du dispositif de refroidissement (24) aménagés dans l'espace récepteur (20) est pressée contre une coque du au moins un élément d'accumulateur (12).
